(19) Europäisches Patentamt
European Patent Office
Office européen des brevets

(11) EP 4 632 728 B1

(12) **EUROPEAN PATENT SPECIFICATION**

(45) Date of publication and mention
of the grant of the patent:
**29.04.2026 Bulletin 2026/18**

(21) Application number: **24189363.5**

(22) Date of filing: **18.07.2024**

(51) International Patent Classification (IPC):
**G10K 11/178** *(2006.01)*

(52) Cooperative Patent Classification (CPC):
**G10K 11/17853; G10K 11/17821; G10K 11/17873;**
G10K 2210/111; G10K 2210/128; G10K 2210/3038;
G10K 2210/3047

(54) **APPARATUS AND METHOD FOR CANCELLING VEHICLE NOISES**

VORRICHTUNG UND VERFAHREN ZUR UNTERDRÜCKUNG VON FAHRZEUGGERÄUSCHEN

APPAREIL ET PROCÉDÉ POUR ANNULER DES BRUITS DE VÉHICULE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **08.04.2024 KR 20240047366**

(43) Date of publication of application:
**15.10.2025 Bulletin 2025/42**

(73) Proprietor: **Hanwha Aerospace Co., Ltd.
Changwon-si, Gyeongsangnam-do 51542 (KR)**

(72) Inventors:
• YOO, Tae Kwang
  **Changwon-si, Gyeongsangnam-do 51542 (KR)**
• YOON, Jin Ho
  **Changwon-si, Gyeongsangnam-do 51542 (KR)**

(74) Representative: **Gulde & Partner
Patent- und Rechtsanwaltskanzlei mbB
Berliner Freiheit 2
10785 Berlin (DE)**

(56) References cited:
JP-A- 2018 176 824      JP-A- 2019 119 375
US-A1- 2013 108 067      US-A1- 2024 034 463

EP 4 632 728 B1

**Description**

BACKGROUND

1. Field

The present disclosure relates to noise cancelling technology, and more particularly, to a technology that effectively cancels out noise generated from a plurality of noise sources of a vehicle being driven in various environments.

2. Description of the Related Art

In a weapon system, ground vehicles such as tanks, armored vehicles, self-propelled artillery and combat vehicles and aerial vehicles such as helicopters and drones which generate lift necessary for flight using rotating blades are highly likely to be discovered by an enemy's weapon system due to various noises generated while they are moving, and thus their fighting power is highly likely to be exposed. The biggest noises in the weapon system are, in the case of the ground vehicles, engine exhaust noise, friction noise of tracks themselves, friction noise between the tracks and a vehicle body, friction noise between tracks/wheels and a road surface, etc. and, in the case of the aerial vehicles, motor noise, friction noise between rotating blades and the air, etc. Therefore, it is essential to reduce these noises.

A conventional active noise cancellation (ANC) apparatus for cancelling out the above noises immediately detects a signal at a time when noise occurs and generates a waveform opposite to the noise, thereby eliminating the noise in a mutually cancelling manner. The ANC has been mainly used to eliminate noise introduced into a vehicle in order to protect passengers inside the vehicle (to protect hearing, maintain an environment in which communication is possible, etc.).

However, in the case of combat vehicles, it is necessary to reduce (or cancel) noise radiated to the outside in order to minimize detection during maneuver or combat for tactical deployment. In addition, for effective/three-dimensional noise reduction, the location of a noise source and the direction and pattern of noise spread may be considered together.

US 2024/034463 A1 discloses a helicopter active noise suppression device integrating a sound array and on-propeller control, so as to realize noise reduction of alldomain and all-type helicopter noise. JP 2018 176824 A relates to a vehicle power source noise reduction device accordingly arranged near an outer surface of a vehicle power source for driving a vehicle to reduces noise radiated from a vehicle power source. JP 2019 119375 A concerns a tire noise reduction device which aims at reduction of pattern noise which changes with road surface conditions at the time of a run of vehicles. US 2013/108067 A1 relates to an overload protection for loud-speakers which are used in exhaust systems of vehicles driven by combustion engines for the active cancellation or influencing of sound waves.

SUMMARY

Aspects of the present disclosure provide an adaptive active noise cancellation (ANC) technique which prevents a movable vehicle from being detected from the outside by effectively cancelling/reducing noises generated in the vehicle for various reasons.

However, aspects of the present disclosure are not restricted to the one set forth herein. The above and other aspects of the present disclosure will become more apparent to one of ordinary skill in the art to which the present disclosure pertains by referencing the detailed description of the present disclosure given below.

According to an aspect of the present invention, there is provided a vehicle noise cancelling apparatus including: a processor; a memory storing program instructions to be executed by the processor; one or more microphones detecting noise generated from one or more noise sources mounted on a vehicle; a parameter measurement unit measuring parameters which affect the noise while the vehicle is being driven; a mobility determination unit configured for determining whether the generated noise is dynamic noise which moves with the vehicle or static noise which is unrelated to the movement of the vehicle; a control unit predicting a radiation pattern of the noise based on the measured parameters and producing a sound wave in antiphase to the generated noise based on the predicted radiation pattern of the noise; and one or more antiphase speakers modulating the produced sound wave and radiating the modulated sound wave to the outside under the control of the control unit.

A combination of a microphone and an antiphase speaker corresponding to each of the noise sources may be installed near each of the noise sources.

The vehicle noise cancelling apparatus may further include a beamforming unit controlling the antiphase speaker such that the antiphase sound wave may have directivity toward a noise source, or similar or essentially identical directivity as the noise source (e.g., directed towards a potential recipient of the noise), when the antiphase speaker cannot be installed near the noise source.

The noise source, near which the antiphase speaker cannot be installed, may be a driving wheel of a ground vehicle or a propeller of an aerial vehicle.

The beamforming unit may cause the antiphase sound wave to have directivity by controlling a sound field of the antiphase speaker.

The antiphase speaker may be configured as an array speaker.

The vehicle noise cancelling apparatus may further include a parameter learning unit storing a parameter model generated by learning the parameters in advance in a database.

The control unit may predict the radiation pattern of the noise by comparing the measured parameters with the generated parameter model.

The control unit may update the database when the measured parameters are different from the parameter model stored in the database by more than a reference value, e.g., a certain predefined or predetermined reference value.

The parameter measurement unit may include an atmospheric condition measurement unit measuring atmospheric conditions which may comprise at least one of atmospheric pressure, temperature, and humidity, and may further include a road surface type determination unit determining a type of a road surface on which the vehicle is being driven through a vision sensor or a microphone.

The type of the road surface may comprise at least two of asphalt road surface, concrete road surface, sand road surface, gravel road surface, and rough/wild ground.

The parameter measurement unit further may comprise a driving speed measurement unit which may measure a driving speed of the vehicle.

The driving speed may be measured from a GPS sensor and/or a wheel encoder mounted on the vehicle.

The atmospheric condition measurement unit may measure the atmospheric conditions when the vehicle is at a standstill after being started, and the driving speed measurement unit may measure the driving speed while the vehicle is being driven.

The vehicle noise cancelling apparatus includes a mobility determination unit determining whether the generated noise is dynamic noise which moves with the vehicle or static noise which is unrelated to the movement of the vehicle.

When the generated noise is static noise, the control unit may correct a pitch of the produced antiphase sound wave according to a speed at which the vehicle moves away from a location where the noise is generated.

The control unit may increase the amount by which the pitch is corrected as the speed at which the vehicle moves away increases, and the pitch after the correction may be higher than the pitch before the correction by the amount of correction.

According to another aspect of the present invention, there is provided a vehicle noise cancelling method performed by an apparatus which comprises a processor and a memory storing program instructions to be executed by the processor, the method including: detecting noise generated from one or more noise sources mounted on a vehicle by using one or more microphones; measuring parameters which affect the noise while the vehicle is being driven; determining whether the generated noise is dynamic noise which moves with the vehicle or static noise which is unrelated to the movement of the vehicle; predicting a radiation pattern of the noise based on the measured parameters; producing a sound wave in antiphase to the generated noise based on the predicted radiation pattern of the noise; and modulating the produced sound wave and radiating the modulated sound wave to the outside through one or more antiphase speakers, wherein a combination of a microphone and an antiphase speaker corresponding to each of the noise sources is installed near each of the noise sources.

The vehicle noise cancelling method may further include, when the generated noise is static noise, correcting a pitch of the produced antiphase sound wave according to a speed at which the vehicle moves away from a location where the noise is generated.

The vehicle noise cancelling method may further include controlling the antiphase speaker such that the antiphase sound wave may have directivity toward a noise source, or similar or essentially identical directivity as the noise source (e.g., directed towards a potential recipient of the noise) when the antiphase speaker cannot be installed near the noise source.

The vehicle noise cancelling method may further include storing a parameter model generated by learning the parameters in advance in a database.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

BRIEF DESCRIPTION OF THE DRAWINGS

These and/or other aspects will become apparent and more readily appreciated from the following description of the embodiments, taken in conjunction with the accompanying drawings in which:

FIG. 1 is a block diagram of a vehicle noise cancelling apparatus according to an embodiment of the present disclosure;

FIG. 2 illustrates a process in which noise and an antiphase sound wave overlap and cancel each other out;

FIG. 3 is a detailed block diagram of a parameter measurement unit included in the vehicle noise cancelling apparatus;

FIG. 4A illustrates an example of forming an omnidirectional antiphase sound wave, and FIG. 4B illustrates an example of forming an antiphase sound wave having directivity through beamforming;

FIG. 5A illustrates various noise sources of a ground vehicle, and FIG. 5B illustrates various noise sources of an aerial vehicle; and

FIG. 6 illustrates a form in which sound waves of noise generated while a friendly vehicle is being driven are transmitted to an enemy vehicle.

FIG. 7 is a block diagram of an artificial intelligence (AI) device in accordance with an exemplary embodiment of the present disclosure.

FIG. 8 is an example of a deep neural network (DNN) model to which the present disclosure may be applied.

FIG. 9 is a block diagram illustrating the hardware configuration of a computing device that implements a vehicle noise cancelling apparatus in FIG. 1.

DETAILED DESCRIPTION

Advantages and features of the disclosure and methods to achieve them will become apparent from the descriptions of exemplary embodiments herein below with reference to the accompanying drawings. However, the inventive concept is not limited to exemplary embodiments disclosed herein but may be implemented in various ways. Improvements and modifications of the embodiments described above may be made, within the scope of the appended claims. It is to be noted that the scope of the invention is defined by the appended claims. Like reference numerals denote like elements throughout the descriptions.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and/or the present application, and will not be interpreted in an idealized or overly formal sense unless expressly so defined herein.

Terms used herein are for illustrating the embodiments rather than limiting the present disclosure. As used herein, the singular forms are intended to include plural forms as well, unless the context clearly indicates otherwise. Throughout this specification, the word "comprise" and variations such as "comprises" or "comprising," will be understood to imply the inclusion of stated elements but not the exclusion of any other elements.

Hereinafter, exemplary embodiments of the present disclosure will be described in detail with reference to the accompanying drawings.

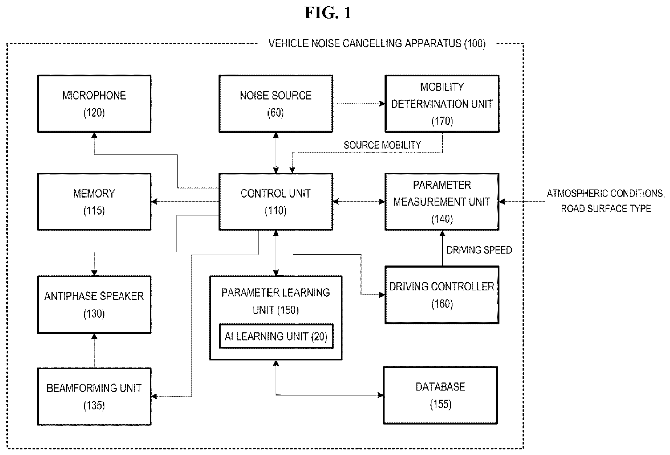

FIG. 1 is a block diagram of a vehicle noise cancelling apparatus 100 according to an embodiment of the present disclosure.

The vehicle noise cancelling apparatus 100 is installed in a vehicle with a noise source 60, which generates noise from inside the vehicle itself or through interaction with the outside, and has a function of cancelling out the noise. The noise source 60 is mostly located inside the vehicle. However, the noise source 60 is not necessarily located inside the vehicle, and noise may also be generated when a part of the vehicle comes into contact with the external environment. Examples of the vehicle include ground vehicles with wheels and tracks and aerial vehicles with propellers and wings. The vehicle noise cancelling apparatus 100 basically includes a control unit 110, which is also referred to as a processor, a micro control unit (MCU) or an electronic control unit (ECU), and a memory 115 which stores program instructions to be executed by the control unit 110.

The vehicle noise cancelling apparatus 100 further includes one or more microphones 120, the noise source 60, an antiphase speaker 130, a parameter measurement unit 140, and a mobility determination unit 170, and may further include a beamforming unit 135, a parameter learning unit 150, a database 155, a driving controller 160, in addition to the control unit 110 and the memory 115.

The microphone 120 detects noise generated from a plurality of noise sources 60 mounted on the vehicle. In addition, the parameter measurement unit 140 has a function of measuring parameters which affect the noise while the vehicle is being driven.

Here, the control unit 110 predicts a radiation pattern of the noise based on the measured parameters and produces a sound wave in antiphase to the generated noise based on the predicted radiation pattern of the noise.

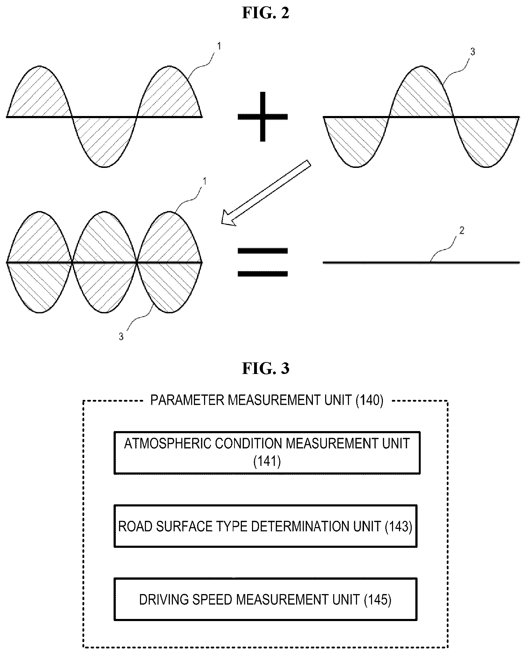

The antiphase speaker 130 modulates the produced sound wave and radiates the modulated sound wave to the outside under the control of the control unit 110. FIG. 2 illustrates a process in which noise and an antiphase sound wave overlap and cancel each other out.

First, when a sound wave 3 in complete antiphase to noise 1 generated from a noise source 60 is radiated by the antiphase speaker 130, the two overlap, and their opposite waveforms cancel each other out. As a result, the noise 1 is eliminated as indicated by reference numeral 2. This process is specifically called active noise cancelling (ANC) and is a distinct concept from passive noise cancelling (PNC) which simply blocks noise regardless of the characteristics of the noise.

In addition, general ANC is used for the purpose of protecting the hearing of passengers inside equipment and for smooth communication. However, the present disclosure presents ANC for preventing a friendly vehicle with various types of noise sources (noise sources with various waveforms, frequencies, and amplitudes) from being detected/discovered by an enemy vehicle. This ANC will hereinafter be referred to as adaptive ANC. In particular, various mobility equipment such as tanks, armored vehicles, self-propelled artillery and combat vehicles and aircraft with rotating blades such as helicopters and drones are bound to generate considerable noise during operation, and this noise can be effectively cancelled by applying the adaptive ANC.

In order to provide the adaptive ANC function, a combination of the microphone 120 and the antiphase speaker 130 corresponding to each of the noise sources 60 mounted on a vehicle is installed near each of the noise sources 60. That is, a microphone and an antiphase speaker are installed near each noise source to directly cancel out individual noise generated from the noise source. However, depending on a noise source, there may be cases where a microphone and an antiphase speaker cannot be installed near the noise source. A solution to this problem will be described later.

Parameters measured by the parameter measurement unit 140 may be learned in advance by the parameter learning unit 150. To this end, the parameter learning unit 150 may learn the parameters in advance based on a radiation pattern of noise, build a model (parameter model) for the parameters, and store the model in the database 155. This learning may be based on supervised or unsupervised artificial intelligence (AI) learning. However, the present disclosure is not limited thereto, and other known learning algorithms (optimization algorithms, functional relational models, etc.) may also be used. In the present disclosure, a case where parameter learning is based on AI learning and thus the parameter learning unit 150 includes an AI learning unit 20 will be described as an example.

Main sources of noise generated from a vehicle may include noise generated from rotors such as an engine, a ventilation fan and a cooling fan, noise generated when tracks collide with the ground, and noise generated due to the vibration of a vehicle body. A database of this noise distribution may be built in advance through measurement and interpretation and may be used later in real time to reproduce antiphase noise. In addition, since the noise distribution data varies according to driving speed and road surface/atmospheric conditions, it is necessary to build a database for this.

Therefore, if various physical quantities can be measured using sensors such as a LiDAR sensor, a camera, a temperature sensor, a humidity sensor, a pressure sensor and a microphone, an environment in which the database 155 storing various parameter models can be built and utilized in real time is created. In addition, when conditions of existing measured parameters fall outside a predetermined threshold, the database 155 may be updated to further improve the accuracy of noise cancellation. This will be described in detail later with reference to FIG. 3.

Ultimately, the control unit 110 may predict the radiation pattern of the noise by comparing the measured parameters with the generated parameter model. ANC itself provides a function of cancelling out noise measured in real time by generating an antiphase waveform to the noise using an antiphase speaker. However, since a processing process for such measurement and waveform generation requires a certain amount of time, unexpected temporary noise (or transition noise) is inevitably radiated to the outside without being cancelled during the noise cancellation process. If this temporary noise is detected by an enemy, the presence and location of a friendly vehicle can be revealed.

Therefore, in the present disclosure, noise cancellation is performed in a manner suitable for the characteristics of a specific noise source and its environment by predicting a radiation pattern of noise based on parameters. Accordingly, the generation of temporary noise can be minimized.

FIG. 3 is a detailed block diagram of the parameter measurement unit 140 included in the vehicle noise cancelling apparatus 100.

As illustrated, the parameter measurement unit 140 includes an atmospheric condition measurement unit 140 and a road surface type determination unit 143 and may further include a driving speed measurement unit 145.

The atmospheric condition measurement unit 141 measures atmospheric conditions including at least one of atmospheric pressure, temperature, and humidity. Basically, antiphase sound waves produced vary according to atmospheric conditions such as temperature, humidity and pressure. Therefore, the atmospheric conditions need to be taken into consideration in order to learn and determine more accurate and rapid noise radiation pattern data.

The road surface type determination unit 143 determines the type of a road surface on which a vehicle is being driven through a vision sensor such as a LiDAR sensor, a laser or a visible light camera or a microphone that can obtain driving sounds. The type of the road surface includes at least two of asphalt road surface, concrete road surface, sand road surface, gravel road surface, and rough/wild ground. In general, radiation pattern data of noise radiated from ground vehicles and aerial vehicles have predictable characteristics under certain conditions. Therefore, an optimal antiphase waveform can be produced and learned in advance based on pre-obtained noise radiation pattern data for each noise generation location (e.g. track, wheel, cooling fan, ventilation fan, exhaust port, etc.) and for each road surface type (asphalt, cement, sand, gravel, soil, etc.).

The driving speed measurement unit 145 measures the driving speed of the vehicle and produces a driving speed parameter. The driving speed may be measured from the driving controller 160 (see FIG. 1) having a GPS sensor and/or a wheel encoder mounted on the vehicle. Antiphase sound waves for the measured atmospheric conditions and for a noise source for each road condition (e.g., road surface type) can be enhanced for a semiactive noise cancellation by additionally considering the driving speed (e.g., vehicle moving speed, engine RPM, rotation speed of rotating blades, etc.).

Here, the atmospheric condition measurement unit 141 may measure and learn the atmospheric conditions before the vehicle is driven because the atmospheric conditions can be secured even when the vehicle is at a standstill after being started. On the other hand, the road surface type determined by the road surface type determination unit 143 and the driving speed measured by the driving speed measurement unit 145 are parameters that can be obtained during actual driving of the vehicle.

Referring back to FIG. 1, as described above, a combination of the microphone 120 and the antiphase speaker 130 may be installed near each noise source 60 to cancel out individual noise generated from the noise source 60. However, depending on the noise source 60, there are cases where the microphone 120 and the antiphase speaker 130 cannot be installed near the noise source 60. For example, wheels or tracks (caterpillars) of ground vehicles and rotating blades and propellers of aerial vehicles are noise sources that generate large noise. However, since they are parts that move at high speed with respect to the vehicle body, it is actually difficult to install other fixed parts near them. Therefore, in this case, the antiphase speaker 130 installed at a location somewhat distant from such a noise source may generate sound waves having directivity toward the noise source, or having similar or essentially identical directivity as the noise source (e.g., directed towards a potential recipient of the noise), thereby achieving a proper noise cancelling effect.

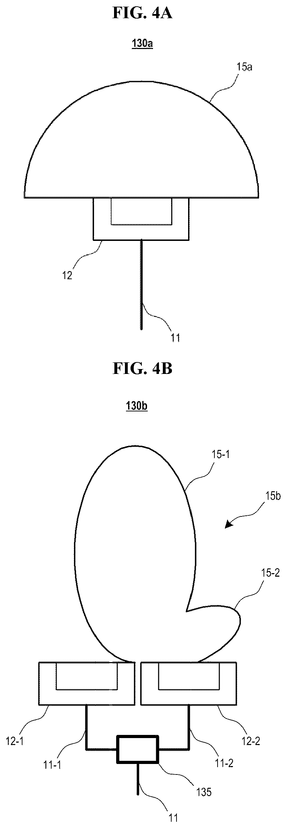

FIG. 4A illustrates an example of forming an omnidirectional antiphase sound wave. FIG. 4B illustrates an example of forming an antiphase sound wave having directivity through beamforming.

In an embodiment of the present disclosure, when the microphone 120 and the antiphase speaker 130 can be installed near a corresponding noise source, a typical antiphase speaker 130a that forms an omnidirectional antiphase sound wave 15a as illustrated in FIG. 4A may be used. The antiphase speaker 130a may consist of a signal input line 11 and an amplifier 12 which generates the omnidirectional antiphase sound wave 15a according to a signal input through the signal input line 11.

In an embodiment of the present disclosure, when the microphone 120 and the antiphase speaker 130 cannot be installed near a corresponding noise source, an antiphase speaker 130b that forms an antiphase sound wave 15b having directivity as illustrated in FIG. 4B may be used. The antiphase speaker 130b may consist of a signal input line 11, branch lines 11-1 and 11-2 which branch from the signal input line 11 and are input to individual amplifiers 12-1 and 12-2, and a plurality of individual amplifiers 12-1 and 12-2 which finally radiate the antiphase sound wave 15b. Here, a beamforming unit 135 may be installed between the signal input line 11 and the branch lines 11-1 and 11-2. The beamforming unit 135 may form a beamforming shape by controlling a sound field of the antiphase speaker 130b based on a signal input from the signal input line 11, so that the antiphase sound wave 15b can have directivity. By applying such beamforming, the individual amplifiers 12-1 and 12-2 can create a specific sound field pattern by adding a processing signal to a wave equation.

The sound wave 15b in the beamforming shape may be created by the overlap of individual sound field patterns 15-1 and 15-2 radiated by the individual amplifiers 12-1 and 12-2, respectively. The beamforming shape may be formed by a plurality of individual amplifiers 12-1 and 12-2. However, the present disclosure is not necessarily limited thereto, and the beamforming shape may also be formed by a single amplifier.

In the present disclosure, since a plurality of microphones 120 and antiphase speakers 130 are already disposed at each noise location in a vehicle, they can be used together as an array speaker. In this case, the antiphase speakers 130 disposed at different noise locations may be combined, and an antiphase sound wave in a three-dimensional (3D) beamforming shape may be generated by the beamforming unit 135. Therefore, it is possible to three-dimensionally reduce noise generated from a noise source 60 disposed at a location where it is difficult to install an antiphase speaker. In this way, when a greater number of antiphase speakers are combined, a sound field pattern of a relatively complex shape can be created, and sound pressure can be concentrated on a specific noise source. Therefore, more effective noise cancellation is possible.

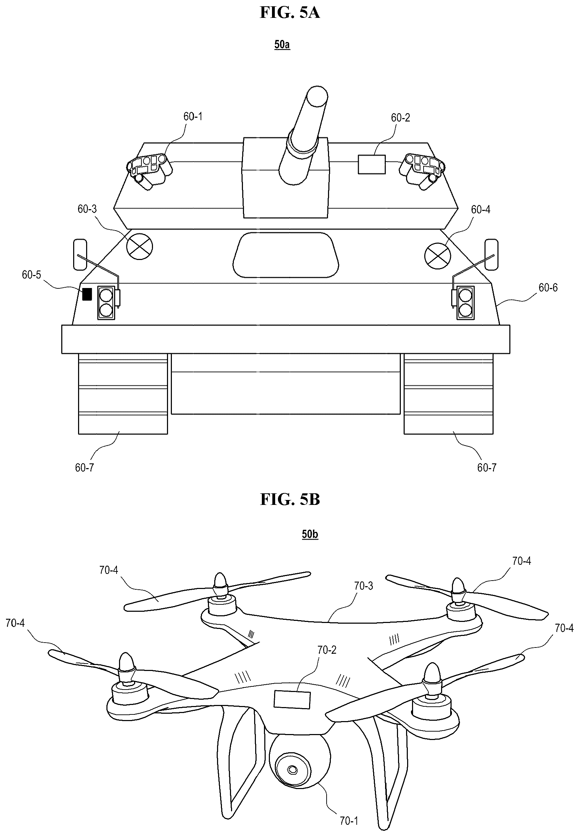

FIG. 5A illustrates various noise sources 60 (e.g., 60-1 through 60-7) of a ground vehicle 50a. FIG. 5B illustrates various noise sources 70 (e.g., 70-1 through 70-4) of an aerial vehicle 50b.

Referring to FIG. 5A, the noise sources 60-1 through 60-7 of the ground vehicle 50a include a vision sensor 60-1 such as a LiDAR sensor or a camera, an environment sensor 60-2 which measures pressure, temperature, humidity, etc., a cooling fan 60-3 for cooling heat generating parts, a ventilation fan 60-4 for blowing air, an exhaust port 60-5 for discharging internal air to the outside, a vehicle body structure 60-6 which generates noise according to the natural frequency of the vehicle itself, and driving units 60-7 such as wheels and tracks for driving the vehicle.

In addition, referring to FIG. 5B, the noise sources 70-1 through 70-4 of the aerial vehicle 50b include a vision sensor 70-1 such as a LiDAR sensor or a camera, an environmental sensor 70-2 which measures pressure, temperature, humidity, etc., a vehicle body structure 70-3 which generates noise according to the natural frequency of the vehicle itself, and propelling units 70-4 such as rotating blades and propellers for moving the vehicle and providing lift.

Various noise sources have different locations and noise radiation patterns, and actual noise radiated to the outside appears as the overlap of individual noises generated from these various noise sources. Therefore, a combination of the microphone 120 and the antiphase speaker 130 corresponding to each of these various noise sources 60 may be installed near each of the noise sources 60 to maximize noise cancelling performance. In addition, when the microphone 120 and the antiphase speaker 130 cannot be installed near a noise source 60 such as a driving unit 60-7 (e.g., a wheel, a track, etc.) or a propelling units 70-4 (e.g., a rotating blade, a propeller, etc.), the microphone 120 or the antiphase speaker 130 may be inevitably installed at a location distant from the noise source 60. However, the above-described beamforming unit 135 may control the antiphase speaker 130 such that an antiphase sound wave has directivity toward the noise source 60, or having similar or essentially identical directivity as the noise source 60 (e.g., directed towards a potential recipient of the noise), thereby preventing degradation of the noise cancelling performance.

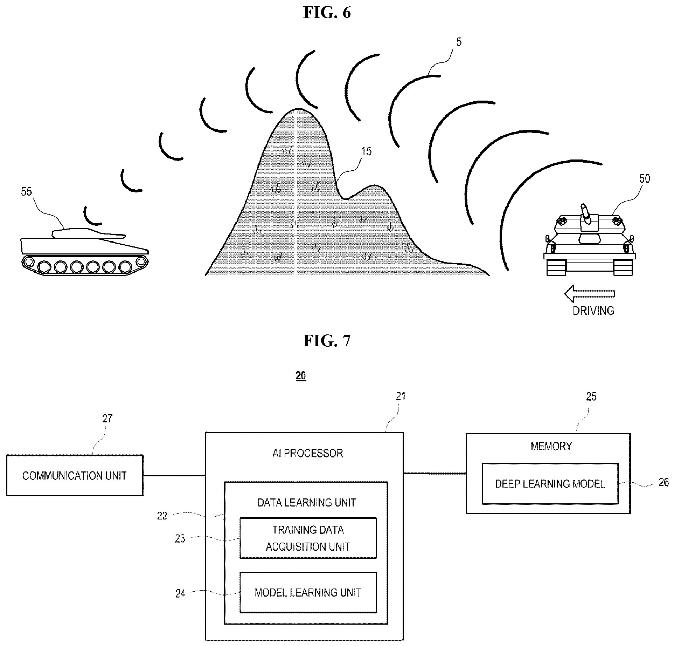

FIG. 6 illustrates a form in which sound waves of noise 5 generated while a friendly vehicle 50 is being driven are transmitted to an enemy vehicle 55. Referring to FIG. 6, the noise 5 generated from the friendly vehicle 50 being driven may be transmitted to the enemy vehicle 55 directly or over an obstacle 15. Therefore, the enemy vehicle 55 can identify the presence and location of the friendly vehicle 50 by detecting the type, size, and direction of the noise 5.

**In** this case, if the friendly vehicle 50 cancels the noise 5 through active ANC, the noise 5 can be eliminated or reduced and thus prevented from being detected by the enemy vehicle 55.

However, if the friendly vehicle 50 is being driven, a Doppler effect occurs in the noise generated. Therefore, the Doppler effect needs to be additionally taken into consideration. To this end, the mobility determination unit 170 determines whether the noise generated while a vehicle is being driven is dynamic noise which moves with the vehicle or static noise which is unrelated to the movement of the vehicle.

Since all of the noise sources illustrated in FIGS. 5A and 5B are noises that move with the vehicle, there is no need to consider the Doppler effect. For example, when the friendly vehicle 50 illustrated in FIG. 5A moves, the above noises also move with the vehicle. Therefore, if the noises are generated, the Doppler effect occurs in the noises heard by the enemy vehicle 55. However, if the noises are cancelled by the friendly vehicle 50 itself, no noise can be heard by the enemy vehicle 55 despite the Doppler effect. Therefore, there is no problem.

However, if the noises are static noises generated by interaction between the moving vehicle 50 and the external environment (e.g., the ground colliding with the wheels or tracks of the vehicle, wind noise caused by the movement of the vehicle, etc.), the Doppler effect must be taken into consideration because the antiphase speaker 130 for cancelling out the static noises is moving.

Therefore, when the generated noise is static noise, the control unit 110 corrects a pitch of the produced antiphase sound wave according to the speed at which the vehicle moves away from a location where the noise is generated. In particular, the control unit 110 increases the amount by which the pitch is corrected as the speed at which the vehicle moves away increases, and the pitch after the correction must be higher than the pitch before the correction by the amount of correction. This is because when the antiphase sound wave radiated through the directional antiphase speaker 130 in the vehicle being driven is directed toward the static noise, since the directional antiphase speaker 130 and the static noise are receding from each other, proper noise cancellation can be achieved only when the pitch of the antiphase sound wave radiated from the vehicle is that high.

For static noise, there is no need to consider the location or moving speed of the enemy vehicle 55 which is a listener. This is because when there is a noise, the noise may be heard after its pitch is changed according to the moving speed of a listener, but if noise cancellation has already been effectively achieved, listening itself will not occur regardless of the pitch change.

Correcting the pitch of static noise in consideration of the Doppler effect as described above may be performed according to Equation 1 below.

$$f_C = \frac{v}{v - v_S} \times f_S$$

$$, \qquad \qquad \dots(1)$$

where $f_C$ is a pitch (frequency) after correction, $v$ is a standard speed of sound, $v_S$ is a moving speed of the friendly vehicle 50, and $f_S$ is an original pitch (frequency) of a sound wave generated from a source.

In addition, the control unit 110 updates the database 155 when the measured parameters are different from the parameter model stored in the database 155 by more than a reference value. This is a process of updating the database 155 when parameters showing significant differences are found through comparison/analysis between parameters obtained by measuring actual ambient noise and a learned parameter model.

FIG. 7 is a block diagram of an artificial intelligence (AI) device in accordance with an exemplary embodiment of the present disclosure.

An AI learning unit 20 may include a communication device including an AI module capable of performing AI processing, a server including the AI module, or the like. The AI learning unit 20 may include an AI processor 21, a memory 25 and/or a communication unit 27. The AI learning unit 20 is a computing device capable of learning a neural network, and may be implemented as various electronic devices such as a server, a desktop PC, a notebook PC, and a tablet PC.

The AI processor 21 may learn a neural network by using a program stored in the memory 25. In particular, the AI processor 21 may learn a neural network for recognizing noise radiation-related data. Here, the neural network for recognizing noise radiation-related data may be designed to simulate a human brain structure on a computer, and may include a plurality of network nodes with weights that simulate neurons of the human neural network. The plurality of network modes may exchange data according to their respective connection relationships such that neurons may simulate the synaptic activity of neurons for sending and receiving signals through synapses. Here, the neural network may include a deep learning model developed from a neural network model. In the deep learning model, a plurality of network nodes may be located in different layers and exchange data according to a convolutional connection relationship. Examples of neural network models include various deep learning techniques, such as deep neural networks (DNN), convolutional deep neural networks (CNN), recurrent neural networks (RNN), restricted Boltzmann machine (RBM), deep belief networks (DBN), or Deep Q-Networks, and may be applied to fields such as computer vision, speech recognition, natural language processing, and speech/signal processing.

Meanwhile, the processor that performs the functions as described above may be a general-purpose processor (e.g., CPU), but may be an AI dedicated processor (e.g., GPU) for artificial intelligence learning.

The memory 25 may store various programs and data required for the operation of the AI learning unit 20. The memory 25 may be implemented by a non-volatile memory, a volatile memory, a flash memory, a hard disk drive (HDD), a solid state drive (SDD), or the like. The memory 25 is accessed by the AI processor 21, and data read/write/edit/delete/update by the AI processor 21 may be performed. In addition, the memory 25 may store a neural network model (e.g., a deep learning model 26) generated through a learning algorithm for data classification/recognition in accordance with an exemplary embodiment of the present disclosure.

Meanwhile, the AI processor 21 may include a data learning unit 22 for learning a neural network for data classification/recognition. The data learning unit 22 may learn a criterion on which training data to use and how to classify and recognize data using the training data in order to determine data classification/recognition. The data learning unit 22 may learn the deep learning model by acquiring training data to be used for learning and applying the acquired training data to the deep learning model.

The data learning unit 22 may be manufactured in the form of at least one hardware chip and mounted on the AI learning unit 20. For example, the data learning unit 22 may be manufactured in the form of a dedicated hardware chip for artificial intelligence (AI), or may be manufactured as a part of a general-purpose processor (CPU) or a dedicated graphics processor (GPU) and mounted on the AI learning unit 20. In addition, the data learning unit 22 may be implemented as a software module. When implemented as a software module (or a program module including an instruction), the software module may be stored in a non-transitory computer-readable medium. In this case, at least one software module may be provided by an operating system (OS) or an application.

The data learning unit 22 may include a training data acquisition unit 23 and a model learning unit 24.

The training data acquisition unit 23 may acquire training data requested for the neural network model for classifying and recognizing data. For example, the training data acquisition unit 23 may acquire noise radiation data and/or sample data for input into the neural network model as training data.

The model learning unit 24 may learn to have a criterion for determining how the neural network model classifies predetermined data by using the acquired training data. In this case, the model learning unit 24 may train the neural network model through supervised learning using at least a portion of the training data as a criterion for determination. Alternatively, the model learning unit 24 may train the neural network model through unsupervised learning to discover a criterion by self-learning using the training data without being supervised. In addition, the model learning unit 24 may train the neural network model through reinforcement learning by using feedback on whether the result of situation determination based on the learning is correct. In addition, the model learning unit 24 may train the neural network model by using a learning algorithm including an error back-propagation method or a gradient decent method.

When the neural network model is trained, the model learning unit 24 may store the learned neural network model in the memory. The model learning unit 24 may store the learned neural network model in a memory of a server connected to the AI learning unit 20 via a wired or wireless network.

The data learning unit 22 may further include a training data preprocessor (not illustrated) and a training data selection unit (not illustrated) in order to improve the analysis result of the recognition model or to save resources or time required for generating the recognition model.

The training data preprocessor may preprocess the acquired data such that the acquired data may be used for learning to determine the situation. For example, the training data preprocessor may process the acquired data into a preset format such that the model learning unit 24 may use the training data acquired for learning for image recognition.

In addition, the training data selection unit may select data required for training from the training data acquired by the training data acquisition unit 23 or the training data preprocessed by the preprocessor. The selected training data may be provided to the model learning unit 24. For example, the training data selection unit may select only data on an object included in a specific region as the training data by detecting the specific region among images acquired through a camera.

In addition, the data learning unit 22 may further include a model evaluation unit (not illustrated) to improve the analysis result of the neural network model.

The model evaluation unit may input evaluation data to the neural network model, and may cause the model learning unit 24 to retrain the neural network model when an analysis result output from the evaluation data does not satisfy a predetermined criterion. In this case, the evaluation data may be predefined data for evaluating the recognition model. For example, the model evaluation unit may evaluate the model as not satisfying a predetermined criterion when, among the analysis results of the trained recognition model for the evaluation data, the number or ratio of evaluation data for which the analysis result is inaccurate exceeds a preset threshold. The communication unit 27 may transmit the AI processing result by the AI processor 21 to an external communication device.

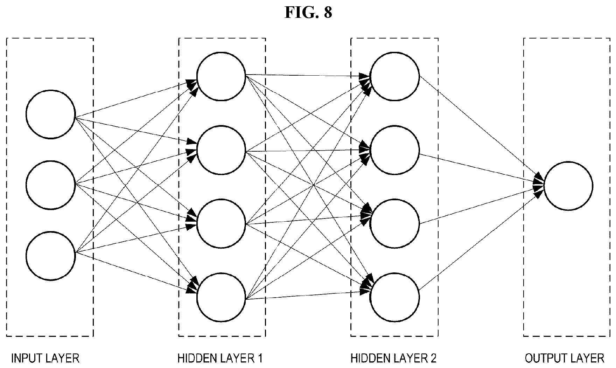

FIG. 8 is an example of a deep neural network (DNN) model to which the present disclosure may be applied.

The deep neural network (DNN) is an artificial neural network (ANN) including several hidden layers between an input layer and an output layer. The deep neural network may model complex non-linear relationships, as in typical artificial neural networks.

For example, in a deep neural network structure for an object identification model, each object may be represented as a hierarchical configuration of basic image elements. In this case, the additional layers may aggregate the characteristics of the gradually gathered lower layers. This feature of deep neural networks allows more complex data to be modeled with fewer units (nodes) than similarly performed artificial neural networks.

As the number of hidden layers increases, the artificial neural network is called 'deep', and machine learning paradigm that uses such a sufficiently deepened artificial neural network as a learning model is called deep learning. Furthermore, the sufficiently deep artificial neural network used for the deep learning is commonly referred to as the deep neural network (DNN).

In the present disclosure, data required to train the generated parameter model may be input to the input layer of the DNN, and meaningful evaluation data that may be used by a user may be generated through the output layer while the data pass through the hidden layers. In this way, the accuracy of the evaluation data trained through the neural network model can be represented by a probability, and the higher the probability, the higher the accuracy of the evaluated result.

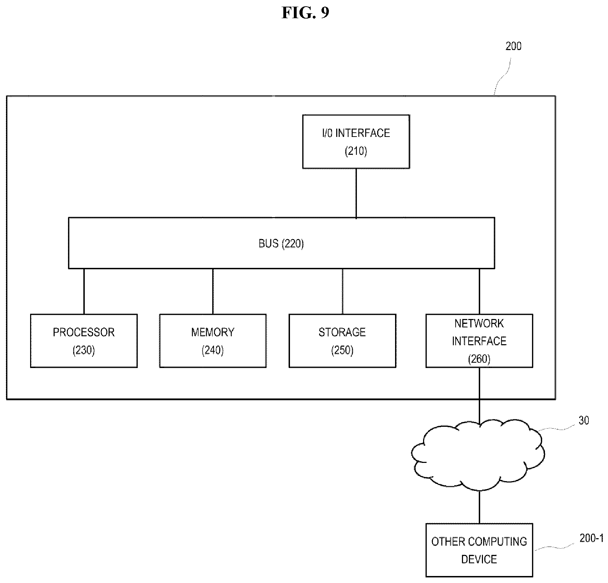

FIG. 9 is a block diagram illustrating the hardware configuration of a computing device 200 that implements a vehicle noise cancelling apparatus 100 in FIG. 1.

The computing device 200 includes a bus 220, a processor 230, a memory 240, a storage 250, an input/output interface 210, and a network interface 260. The bus 220 is a path for the transmission of data between the processor 230, the memory 240, the storage 250, the input/output interface 210, and the network interface 260. However, it is not particularly limited how the processor 230, the memory 240, the storage 250, the input/output interface 210, and the network interface 260 are connected. The processor 230 is an arithmetic processing unit such as a central processing unit (CPU) or a graphics processing unit (GPU). The memory 240 is a memory such as a random-access memory (RAM) or a read-only memory (ROM). The storage 250 is a storage device such as a hard disk, a solid state drive (SSD), or a memory card. The storage 250 may also be a memory such as a RAM or a ROM.

The input/output interface 210 is an interface for connecting the computing device 200 and an input/output device. For example, a keyboard or a mouse is connected to the input/output interface 210.

The network interface 260 is an interface for communicatively connecting the computing device 200 and an external device to exchange transport packets with each other. The network interface 260 may be a network interface for connection to a wired line or for connection to a wireless line. For example, the computing device 200 may be connected to another computing device 200-1 via a network 30.

The storage 250 stores program modules that implement the functions of the computing device 200. The processor 230 implements the functions of the computing device 200 by executing the program modules. Here, the processor 230 may read the program modules into the memory 240 and may then execute the program modules.

The hardware configuration of the computing device 200 is not particularly limited to the configuration illustrated in FIG9. For example, the program modules may be stored in the memory 240. In this example, the computing device 200 may not include the storage 250.

The vehicle noise cancelling apparatus 100 may at least include the processor 230 and the memory 240, which stores instructions that can be executed by the processor 230. The vehicle noise cancelling apparatus 100 of FIG. 1, in particular, can be driven by executing instructions including a variety of functional blocks or steps included in the vehicle noise cancelling apparatus 100, via the processor 230.

A vehicle noise cancelling apparatus and method according to the present disclosure enables tactical deployment through covert maneuver of combat vehicles without being detected by an enemy.

In addition, even when applied to aircraft (such as drones) equipped with rotating blades or general civilian wheeled vehicles, the apparatus and method can effectively reduce noise that adversely affects the surrounding environment.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that improvements and modifications of the embodiments described above may be made, within the scope of the appended claims. The scope of the invention is defined by the appended claims.

**Claims**

1. A vehicle noise cancelling apparatus (100) comprising:

   a processor (21, 230);
   a memory (25, 115, 240) configured for storing program instructions to be executed by the processor (21, 230);
   one or more microphones (120) configured for detecting noise (1, 5) generated from one or more noise sources (60, 70) mounted on a vehicle (50);
   a parameter measurement unit (140) configured for measuring parameters which affect the noise (1, 5) while the vehicle (50) is being driven;
   a control unit (110) configured for predicting a radiation pattern of the noise (1, 5) based on the measured parameters and for producing a sound wave (3) in antiphase to the generated noise (1, 5) based on the predicted radiation pattern of the noise (1, 5); and
   one or more antiphase speakers (130) configured for modulating the produced sound wave (3) and for radiating the modulated sound wave (3) to the outside under the control of the control unit (110),
   **characterised in that** it further comprises
   a mobility determination unit (170) configured for determining whether the generated noise (1, 5) is dynamic noise (1, 5) which moves with the vehicle (50) or static noise (1, 5) which is unrelated to the movement of the vehicle (50).

2. The apparatus of claim 1, wherein a combination of a microphone (120) and an antiphase speaker (130) corresponding to each of the noise sources (60, 70) is installed near each of the noise sources (60, 70).

3. The apparatus of claim 1 or 2, further comprising a beamforming unit (135) configured for controlling the antiphase speaker (130) such that the antiphase sound wave (3) has directivity toward a noise source (60, 70) or similar directivity as the noise source (60, 70) when the antiphase speaker (130) cannot be installed near the noise source (60, 70).

4. The apparatus of any one of the preceding claims, further comprising a parameter learning unit (150) configured for storing a parameter model generated by learning the parameters in advance in a database (155).

5. The apparatus of claim 4, wherein the control unit (110) predicts the radiation pattern of the noise (1, 5) by comparing the measured parameters with the generated parameter model.

6. The apparatus of claim 4 or 5, wherein the control unit (110) updates the database (155) when the measured parameters are different from the parameter model stored in the database (155) by more than a reference value.

7. The apparatus of any one of the preceding claims, wherein the parameter measurement unit (140) comprises:

   an atmospheric condition measurement unit (141) configured for measuring atmospheric conditions which comprise at least one of atmospheric pressure, temperature, and humidity; and
   a road surface type determination unit (143) configured for determining a type of a road surface on which the vehicle (50) is being driven through a vision sensor (60-1, 70-1) or a microphone (120).

8. The apparatus of claim 7, wherein the type of the road surface comprises at least two of asphalt road surface, concrete road surface, sand road surface, gravel road surface, and rough/wild ground.

9. The apparatus of claim 7 or 8, wherein the parameter measurement unit (140) further comprises a driving speed measurement unit (145) configured for measuring a driving speed of the vehicle (50).

10. The apparatus of claim 9, wherein the driving speed is measured from a GPS sensor and/or a wheel encoder mounted on the vehicle (50).

11. The apparatus of claim 9 or 10, wherein the atmospheric condition measurement unit (141) is configured for measuring the atmospheric conditions when the vehicle (50) is at a standstill after being started, and the driving speed measurement unit (145) is configured for measuring the driving speed while the vehicle (50) is being driven.

12. The apparatus of any one of the preceding claims, wherein when the generated noise (1, 5) is static noise (1, 5), the control unit (110) is configured for correcting a pitch of the produced antiphase sound wave (3) according to a speed at which the vehicle (50) moves away from a location where the noise (1, 5) is generated.

13. The apparatus of claim 12, wherein the control unit (110) increases the amount by which the pitch is corrected as the speed at which the vehicle (50) moves away increases, and the pitch after the correction is higher than the pitch before the correction by the amount of correction.

14. A vehicle (50) noise (1, 5) cancelling method performed by an apparatus which comprises a processor (21, 230) and a memory (25, 115, 240) storing program instructions to be executed by the processor (21, 230), the method comprising:

detecting noise (1, 5) generated from one or more noise sources (60, 70) mounted on a vehicle (50) by using one or more microphones (120);
measuring parameters which affect the noise (1, 5) while the vehicle (50) is being driven;
determining whether the generated noise (1, 5) is dynamic noise (1, 5) which moves with the vehicle (50) or static noise (1, 5) which is unrelated to the movement of the vehicle (50);
predicting a radiation pattern of the noise (1, 5) based on the measured parameters;
producing a sound wave (3) in antiphase to the generated noise (1, 5) based on the predicted radiation pattern of the noise (1, 5); and
modulating the produced sound wave (3) and radiating the modulated sound wave (3) to the outside through one or more antiphase speakers (130),
wherein a combination of a microphone (120) and an antiphase speaker (130) corresponding to each of the noise sources (60, 70) is installed near each of the noise sources (60, 70).

15. The method of claim 14, wherein when the generated noise (1, 5) is static noise (1, 5), correcting a pitch of the produced antiphase sound wave (3) according to a speed at which the vehicle (50) moves away from a location where the noise (1, 5) is generated.

**Patentansprüche**

1. Vorrichtung zur Unterdrückung von Fahrzeuggeräuschen (100), umfassend:

einen Prozessor (21, 230);
einen Speicher (25, 115, 240), der zum Speichern von Programmbefehlen konfiguriert ist, die vom Prozessor (21, 230) ausgeführt werden sollen;
ein oder mehrere Mikrofone (120), die zum Erfassen von Geräuschen (1, 5) konfiguriert sind, die von einer oder mehreren Geräuschquellen (60, 70) erzeugt werden, die an einem Fahrzeug (50) angebracht sind;
eine Parametermesseinheit (140), die zum Messen von Parametern konfiguriert ist, die die Geräusche (1, 5) beeinflussen, während das Fahrzeug (50) gefahren wird;
eine Steuereinheit (110), die dazu konfiguriert ist, ein Abstrahlmuster der Geräusche (1, 5) auf der Grundlage der gemessenen Parameter vorherzusagen und auf der Grundlage des vorhergesagten Abstrahlmusters der Geräusche (1, 5) eine Schallwelle (3) zu erzeugen, die zu den erzeugten Geräuschen (1, 5) gegenphasig ist; und
einen oder mehrere gegenphasige Lautsprecher (130), die zum Modulieren der erzeugten Schallwelle (3) und zum Abstrahlen der modulierten Schallwelle (3) nach außen unter der Steuerung der Steuereinheit (110) konfiguriert sind,
**dadurch gekennzeichnet, dass** sie ferner Folgendes umfasst:
eine Mobilitätsbestimmungseinheit (170), die dazu konfiguriert ist, festzustellen, ob die erzeugten Geräusche (1, 5) dynamische Geräusche (1, 5) sind, die sich mit dem Fahrzeug (50) bewegen, oder statische Geräusche (1, 5), die nicht mit der Bewegung des Fahrzeugs (50) zusammenhängen.

2. Vorrichtung nach Anspruch 1, wobei eine Kombination aus einem Mikrofon (120) und einem gegenphasigen Lautsprecher (130), die jeder der Geräuschquellen (60, 70) entspricht, in der Nähe jeder der Geräuschquellen (60, 70) installiert ist.

3. Vorrichtung nach Anspruch 1 oder 2, umfassend ferner eine Beamforming-Einheit (135), die dazu konfiguriert ist, den gegenphasigen Lautsprecher (130) so zu steuern, dass die gegenphasige Schallwelle (3) eine Richtwirkung in Richtung einer Geräuschquelle (60, 70) oder eine ähnliche Richtwirkung wie die Geräuschquelle (60, 70) aufweist, wenn der gegenphasige Lautsprecher (130) nicht in der Nähe der Geräuschquelle (60, 70) installiert werden kann.

4. Vorrichtung nach einem der vorstehenden Ansprüche, umfassend ferner eine Parameterlern-Einheit (150), die zum Speichern eines Parametermodells konfiguriert ist, das durch vorheriges Lernen der Parameter in einer Datenbank (155) erzeugt wird.

5. Vorrichtung nach Anspruch 4, wobei die Steuereinheit (110) das Abstrahlmuster der Geräusche (1, 5) durch Vergleichen der gemessenen Parameter mit dem erzeugten Parametermodell vorhersagt.

6. Vorrichtung nach Anspruch 4 oder 5, wobei die Steuereinheit (110) die Datenbank (155) aktualisiert, wenn die gemessenen Parameter um mehr als einen Referenzwert von dem in der Datenbank (155) gespeicherten Parametermodell abweichen.

7. Vorrichtung nach einem der vorstehenden Ansprüche, wobei die Parametermesseinheit (140) Folgendes umfasst:

eine Atmosphärenbedingungen-Messeinheit (141), die zum Messen atmosphärischer Bedingungen konfiguriert ist, die mindestens eines von Atmosphärendruck, Temperatur und Feuchtigkeit umfassen; und
eine Straßenoberflächentyp-Bestimmungseinheit (143), die zum Bestimmen eines Typs einer Straßenoberfläche konfiguriert ist, auf der das Fahrzeug (50) fährt, und zwar über einen Vision-Sensor (60-1, 70-1) oder ein Mikrofon (120).

8. Vorrichtung nach Anspruch 7, wobei der Typ der Straßenoberfläche mindestens zwei von Asphaltstraßenoberfläche, Betonstraßenoberfläche, Sandstraßenoberfläche, Schotterstraßenoberfläche und unebenem/wildem Boden umfasst.

9. Vorrichtung nach Anspruch 7 oder 8, wobei die Parametermesseinheit (140) ferner eine Fahrgeschwindigkeitsmesseinheit (145) umfasst, die zum Messen einer Fahrgeschwindigkeit des Fahrzeugs (50) konfiguriert ist.

10. Vorrichtung nach Anspruch 9, wobei die Fahrgeschwindigkeit von einem GPS-Sensor und/oder einem am Fahrzeug (50) angebrachten Radencoder gemessen wird.

11. Vorrichtung nach Anspruch 9 oder 10, wobei die Atmosphärenbedingungen-Messeinheit (141) dazu konfiguriert ist, die Atmosphärenbedingungen zu messen, wenn das Fahrzeug (50) nach dem Starten steht, während die Fahrgeschwindigkeitsmesseinheit (145) dazu konfiguriert ist, die Fahrgeschwindigkeit zu messen, während das Fahrzeug (50) gefahren wird.

12. Vorrichtung nach einem der vorstehenden Ansprüche, wobei, wenn die erzeugten Geräusche (1, 5) statische Geräusche (1, 5) sind, die Steuereinheit (110) dazu konfiguriert ist, die Tonhöhe der erzeugten gegenphasigen Schallwelle (3) entsprechend der Geschwindigkeit zu korrigieren, mit der sich das Fahrzeug (50) von einem Ort wegbewegt, an dem die Geräusche (1, 5) erzeugt werden.

13. Vorrichtung nach Anspruch 12, wobei die Steuereinheit (110) den Betrag erhöht, um den die Tonhöhe korrigiert wird, wenn die Geschwindigkeit, mit der sich das Fahrzeug (50) wegbewegt, zunimmt, und wobei die Tonhöhe nach der Korrektur um den Korrekturbetrag höher ist als die Tonhöhe vor der Korrektur.

14. Verfahren zur Unterdrückung von Geräuschen (1, 5) eines Fahrzeuges (50), das von einer Vorrichtung durchgeführt wird, die einen Prozessor (21, 230) und einen Speicher (25, 115, 240) umfasst, in dem vom Prozessor (21, 230) auszuführende Programmbefehle gespeichert sind, wobei das Verfahren Folgendes umfasst:

Erfassen von Geräuschen (1, 5), die von einer oder mehreren Geräuschquellen (60, 70) erzeugt werden, die an einem Fahrzeug (50) angebracht sind, unter Verwendung eines oder mehrerer Mikrofone (120);

Messen von Parametern, die die Geräusche (1, 5) beeinflussen, während das Fahrzeug (50) gefahren wird;

Feststellen, ob die erzeugten Geräusche (1, 5) dynamische Geräusche (1, 5) sind, die sich mit dem Fahrzeug (50) bewegen, oder statische Geräusche (1, 5), die nicht mit der Bewegung des Fahrzeugs (50) zusammenhängen;

Vorhersagen eines Abstrahlmusters der Geräusche (1, 5) auf der Grundlage der gemessenen Parameter;

Erzeugen einer Schallwelle (3), die zu den erzeugten Geräuschen (1, 5) gegenphasig ist, auf der Grundlage des vorhergesagten Abstrahlmusters der Geräusche (1, 5); und

Modulieren der erzeugten Schallwelle (3) und Abstrahlen der modulierten Schallwelle (3) nach außen durch einen oder mehrere gegenphasige Lautsprecher (130),

wobei eine Kombination aus einem Mikrofon (120) und einem gegenphasigen Lautsprecher (130), die jeder der Geräuschquellen (60, 70) entspricht, in der Nähe jeder der Geräuschquellen (60, 70) installiert ist.

**15.** Verfahren nach Anspruch 14, wobei, wenn die erzeugten Geräusche (1, 5) statische Geräusche (1, 5) sind, eine Tonhöhe der erzeugten gegenphasigen Schallwelle (3) entsprechend einer Geschwindigkeit korrigiert wird, mit der sich das Fahrzeug (50) von einem Ort wegbewegt, an dem die Geräusche (1, 5) erzeugt werden.

## Revendications

**1.** Appareil pour annuler des bruits de véhicule (100), comprenant :

un processeur (21, 230) ;

une mémoire (25, 115, 240) configurée pour stocker des instructions de programme à être exécutées par le processeur (21, 230) ;

un ou plusieurs microphones (120) configurés pour détecter des bruits (1, 5) générés à partir d'une ou de plusieurs sources de bruits (60, 70) montées sur un véhicule (50) ;

une unité de mesure de paramètres (140) configurée pour mesurer des paramètres qui affectent les bruits (1, 5) pendant que le véhicule (50) est conduit ;

une unité de commande (110) configurée pour prédire un motif de rayonnement des bruits (1, 5) sur la base des paramètres mesurés et pour produire une onde sonore (3) en antiphase par rapport aux bruits générés (1, 5) sur la base du motif de rayonnement prédit des bruits (1, 5) ; et

un ou plusieurs haut-parleurs en antiphase (130) configurés pour moduler l'onde sonore produite (3) et pour rayonner l'onde sonore modulée (3) vers l'extérieur sous le contrôle de l'unité de commande (110),

**caractérisé en ce qu'**il comprend en outre

une unité de détermination de mobilité (170) configurée pour déterminer si les bruits générés (1, 5) sont des bruits dynamiques (1, 5) qui se déplacent avec le véhicule (50) ou des bruits statiques (1, 5) qui sont sans relation avec le mouvement du véhicule (50).

**2.** Appareil selon la revendication 1, dans lequel une combinaison d'un microphone (120) et d'un haut-parleur en antiphase (130) correspondant à chacune des sources de bruits (60, 70) est installée à proximité de chacune des sources de bruits (60, 70).

**3.** Appareil selon la revendication 1 ou 2, comprenant en outre une unité de formation de faisceau (135) configurée pour commander le haut-parleur en antiphase (130) de sorte que l'onde sonore en antiphase (3) présente une directivité vers une source de bruits (60, 70) ou une directivité similaire à celle de la source de bruits (60, 70) lorsque le haut-parleur en antiphase (130) ne peut pas être installé à proximité de la source de bruits (60, 70).

**4.** Appareil selon l'une quelconque des revendications précédentes, comprenant en outre une unité d'apprentissage de paramètres (150) configurée pour stocker un modèle de paramètres généré par apprentissage des paramètres à l'avance dans une base de données (155).

**5.** Appareil selon la revendication 4, dans lequel l'unité de commande (110) prédit le motif de rayonnement des bruits (1, 5) en comparant les paramètres mesurés avec le modèle de paramètres généré.

**6.** Appareil selon la revendication 4 ou 5, dans lequel l'unité de commande (110) met à jour la base de données (155) lorsque les paramètres mesurés sont différents du modèle de paramètres stocké dans la base de données (155) de plus d'une valeur de référence.

**7.** Appareil selon l'une quelconque des revendications précédentes, dans lequel l'unité de mesure de paramètres (140) comprend :

une unité de mesure de conditions atmosphériques (141) configurée pour mesurer des conditions atmosphériques qui comprend au moins une parmi pression atmosphérique, une température et une humidité ; et une unité de détermination de type de surface de route (143) configurée pour déterminer un type de surface de route sur laquelle le véhicule (50) est conduit à l'aide d'un capteur de vision (60-1, 70-1) ou d'un microphone (120).

8. Appareil selon la revendication 7, dans lequel le type de surface de route comprend au moins deux parmi une surface de route en asphalte, une surface de route en béton, une surface de route sableuse, une surface de route en gravier et un terrain accédenté/sauvage.

9. Appareil selon la revendication 7 ou 8, dans lequel l'unité de mesure de paramètres (140) comprend en outre une unité de mesure de vitesse de conduite (145) configurée pour mesurer une vitesse de conduite du véhicule (50).

10. Appareil selon la revendication 9, dans lequel la vitesse de conduite est mesurée à partir d'un capteur GPS et/ou d'un codeur de roue monté sur le véhicule (50).

11. Appareil selon la revendication 9 ou 10, dans lequel l'unité de mesure de conditions atmosphériques (141) est configurée pour mesurer les conditions atmosphériques lorsque le véhicule (50) est à l'arrêt après avoir été démarré, et l'unité de mesure de vitesse de conduite (145) est configurée pour mesurer la vitesse de conduite pendant que le véhicule (50) est conduit.

12. Appareil selon l'une quelconque des revendications précédentes, dans lequel lorsque les bruits générés (1, 5) sont des bruits statiques (1, 5), l'unité de commande (110) est configurée pour corriger une hauteur de l'onde sonore en antiphase produite (3) selon une vitesse à laquelle le véhicule (50) s'éloigne d'une localisation où les bruits (1, 5) sont générés.

13. Appareil selon la revendication 12, dans lequel l'unité de commande (110) augmente une quantité de correction de la hauteur à mesure que la vitesse à laquelle le véhicule (50) s'éloigne augmente, et la hauteur après correction est supérieure à la hauteur avant correction de la quantité de correction.

14. Procédé pour annuler des bruits (1, 5) du véhicule (50) exécuté par un appareil qui comprend un processeur (21, 230) et une mémoire (25, 115, 240) stockant des instructions de programme à être exécutées par le processeur (21, 230), le procédé consistant à :

détecter des bruits (1, 5) générés à partir d'une ou de plusieurs sources de bruits (60, 70) montées sur un véhicule (50) en utilisant un ou plusieurs microphones (120) ;
mesurer des paramètres qui affectent les bruits (1, 5) pendant que le véhicule (50) est conduit ;
déterminer si les bruits générés (1, 5) sont des bruits dynamiques (1, 5) qui se déplacent avec le véhicule (50) ou des bruits statiques (1, 5) qui sont sans relation avec le mouvement du véhicule (50) ;
prédire un motif de rayonnement des bruits (1, 5) sur la base des paramètres mesurés ;
produire une onde sonore (3) en antiphase par rapport aux bruits générés (1, 5) sur la base du motif de rayonnement prédit des bruits (1, 5) ; et
moduler l'onde sonore produite (3) et rayonner l'onde sonore modulée (3) vers l'extérieur au moyen d'un ou de plusieurs haut-parleurs en antiphase (130),
dans lequel une combinaison d'un microphone (120) et d'un haut-parleur en antiphase (130) correspondant à chacune des sources de bruits (60, 70) est installée à proximité de chacune des sources de bruits(60, 70).

15. Procédé selon la revendication 14, dans lequel lorsque les bruits générés (1, 5) sont des bruits statiques (1, 5), corriger une hauteur de l'onde sonore en antiphase produite (3) selon une vitesse à laquelle le véhicule (50) s'éloigne d'une localisation où les bruits (1, 5) sont générés.

**FIG. 1**

VEHICLE NOISE CANCELLING APPARATUS (100)

| | | |
|---|---|---|
| MICROPHONE (120) | NOISE SOURCE (60) | MOBILITY DETERMINATION UNIT (170) |

SOURCE MOBILITY

| | | |
|---|---|---|
| MEMORY (115) | CONTROL UNIT (110) | PARAMETER MEASUREMENT UNIT (140) |

ATMOSPHERIC CONDITIONS, ROAD SURFACE TYPE

DRIVING SPEED

| | | |
|---|---|---|
| ANTIPHASE SPEAKER (130) | PARAMETER LEARNING UNIT (150) — AI LEARNING UNIT (20) | DRIVING CONTROLLER (160) |

| | |
|---|---|
| BEAMFORMING UNIT (135) | DATABASE (155) |

15

**FIG. 2**

**FIG. 3**

**FIG. 4A**

130a

15a

12

11

**FIG. 4B**

130b

15-1

15b

15-2

12-1

12-2

11-1

11-2

135

11

**FIG. 5A**

50a

**FIG. 5B**

50b

**FIG. 6**

DRIVING

**FIG. 7**

20

COMMUNICATION UNIT

AI PROCESSOR

DATA LEARNING UNIT

TRAINING DATA ACQUISITION UNIT

MODEL LEARNING UNIT

MEMORY

DEEP LEARNING MODEL

FIG. 8

INPUT LAYER          HIDDEN LAYER 1          HIDDEN LAYER 2          OUTPUT LAYER

**FIG. 9**

200

I/O INTERFACE
(210)

BUS (220)

PROCESSOR
(230)

MEMORY
(240)

STORAGE
(250)

NETWORK
INTERFACE
(260)

30

OTHER COMPUTING
DEVICE

200-1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2024034463 A1
- JP 2018176824 A
- JP 2019119375 A
- US 2013108067 A1